# FASCICULE DE BREVET EUROPEEN

(11) **EP 2 246 221 B1**
(45) Date de publication et mention de la délivrance du brevet: **08.01.2014**
(21) Numéro de dépôt: 10161212.5
(22) Date de dépôt: 27.04.2010
(51) Int. Cl.: B60R 19/30

(54) **Kart à moyens d'absorption élastique des chocs, dispositif correspondant**
Go-kart mit elastischen aufpralldämpfenden Mitteln, entsprechende Vorrichtung
Go-kart with elastic shock absorbing means, corresponding device

(30) Priorité: 27.04.2009 FR 0952757
(43) Date de publication de la demande: 03.11.2010
(73) Titulaire: SODIKART, 44200 Couëron (FR)
(72) Inventeur: Gergaud, William, 44119, TREILLERES (FR); Meneret, Mickaël, 44220, COUËRON (FR)
(74) Mandataire: Bioret, Ludovic

(56) Documents cités:
- WO-A-97/15473
- DE-A1- 2 510 892
- DE-A1- 19 542 346
- US-A- 1 457 332
- US-A- 4 200 318
- US-A- 5 570 918

## Description

### 1. Domaine de l'invention

Le domaine de l'invention est celui de l'absorption d'énergie cinétique en cas de choc, notamment sur un véhicule de loisir, et en particulier un kart. En d'autres termes, l'invention concerne des moyens d'absorption de chocs, ou absorbeurs de choc, ainsi que, notamment, les karts équipés de tels absorbeurs de chocs.

Plus généralement, l'invention résolvant ce problème, exposée plus loin, peut trouver des applications dans de nombreux domaines où il est nécessaire ou souhaitable d'absorber, de façon répétitive, des chocs ou des forces relativement importantes, sans destruction ni détérioration. Ainsi, par exemple, l'invention peut s'appliquer à tout véhicule, et même à tout objet fixe dont il convient de protéger l'intégrité en cas de choc par un véhicule ou tout autre objet mobile.

### 2. Art antérieur

La fonction première d'un absorbeur de chocs, dans le domaine de l'automobile comme dans celui du kart, est la sécurité du conducteur.

Malgré ces similitudes, il existe des différences majeures entre l'automobile et le kart.

Dans le cas de l'automobile, l'absorption d'énergie doit permettre d'assurer la sécurité du conducteur dans des chocs à haute vitesse (exemple 65 km/h). Compte tenu des énergies en jeu et des dimensions des véhicules, ceci ne peut être obtenu que par une déformation irréversible de la partie avant du véhicule (déformation plastique).

Dans le cas du kart, les contraintes sont différentes, du fait notamment d'une deuxième fonction de l'absorbeur, spécifique au kart, est de protéger le châssis en diminuant les forces auxquelles il est soumis, et, ainsi, en augmenter la durée de vie. Ainsi :
- l'exploitation du matériel dans un contexte de location fait que le système d'absorption doit être à déformation réversible, afin d'éviter des opérations de maintenance trop fréquentes et trop coûteuses,
- la distance entre les pieds du pilote et la face avant du kart est limitée (typiquement 15 à 25 cm), ce qui restreint l'espace disponible pour intégrer un absorbeur d'énergie,
- les cas de chocs sont multiples, en direction et en intensité.

Il en résulte que la nature technique du problème à résoudre est la suivante :
- absorber un maximum d'énergie dans un espace donné,
- dimensionner l'absorbeur pour ne pas dépasser un nombre limite imposé de g (exemple 10 g), pour une énergie cinétique de référence donnée (exemple énergie d'un kart allant à 10 km/h et de masse 200 kg),
- absorber cette énergie de façon réversible, c'est-à-dire en s'interdisant l'utilisation d'énergie de déformation plastique, et sans phénomène de vieillissement après un nombre élevé de cycles,
- conserver un niveau élevé d'absorption, pour des angles de chocs ou des excentrations variés.

A titre d'exemple, les règles techniques et de sécurité du karting (en France), prévoient que le système d'amortissement de certains karts doit répondre aux exigences suivantes pour un kart de masse M = 200 kg lancé à une vitesse V = 10 km/h contre un mur :
- ne pas dépasser une accélération supérieure à 10 g au cours du choc,
- ne pas présenter de déformation permanente du châssis après l'essai,
- pouvoir satisfaire ces exigences pendant 10 tests consécutifs.

Dans cet exemple, on constate donc que l'on définit une énergie de référence du kart (1/2 * M * V²), et que l'on cherche à limiter le nombre de g lorsque ce kart percute un mur avec cette énergie de référence.

Les solutions proposées dans l'automobile ne répondent pas au problème posé par le kart, car elles reposent sur l'énergie de déformation plastique, qui n'est pas acceptable pour les karts.

Les solutions utilisées dans le kart, telles que des silentblocs ou celle décrite dans le brevet EP-1 805 063, ne répondent pas totalement au problème posé.

Les silentblocs, qui sont, en règle générale, de faible dimension, présentent l'inconvénient d'avoir un taux de compression limité, d'être très durs au-delà de ce taux et ne permettent donc pas d'obtenir une énergie de déformation élevée dans un espace restreint, tout en limitant le nombre de g. Leur tenue en vieillissement est limitée, en particulier lorsqu'ils sont soumis à des sollicitations combinées (compression plus cisaillement), ce qui est le cas dans les karts.

La solution décrite dans le brevet EP-1 805 063 propose que le kart soit équipé d'un bouclier amortisseur, protégeant au moins l'avant, et d'un ensemble de protection protégeant au moins l'arrière et les roues, qui ne doivent pas s'encastrer dans un autre kart, afin d'éviter notamment les risques de tonneau. Elle permet d'obtenir, dans un espace restreint, une énergie de déformation élevée tout en limitant le nombre de g.

En revanche, elle présente au moins trois inconvénients : le premier est celui d'avoir un effet de vieillissement après un nombre élevé de cycles ; le second est, au-delà de l'énergie de référence, de présenter des déformations plastiques ; le troisième est que, en cas de choc avec une énergie supérieure à l'énergie de référence, le système d'absorption devient dur et engendre des forces ou accélérations élevées qui peuvent causer des dommages irréversibles au châssis.

En d'autres termes ce système ne dispose pas d'assez de « réserve », au-delà du choc de référence pour lequel il est prévu.

Dans une utilisation réelle, ces chocs d'énergie supérieure à l'énergie de référence existent. Il est donc souhaitable que le dispositif d'absorption optimise la quantité d'énergie absorbable dans l'espace disponible afin de ne pas arriver en « point dur », sauf en cas de chocs tout à fait exceptionnels.

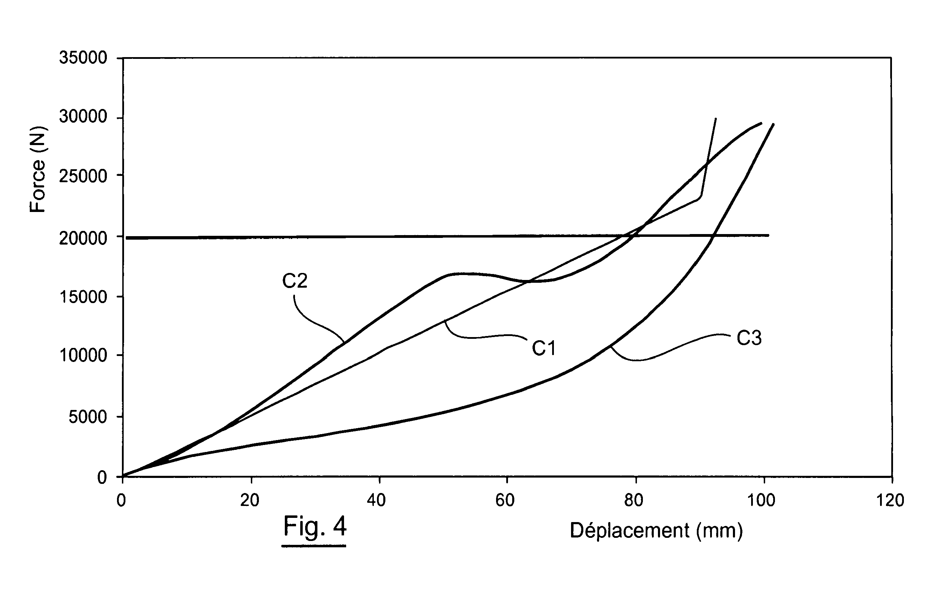

Ce problème d'optimisation de l'énergie de déformation pour un espace disponible donné est illustré par les trois courbes de la figure 4, correspondant au choc de l'exemple précédent (masse 200 kg, 10 km/h).

Dans la figure 4, la force maximale correspond à 10 g sur un kart de 200 kg, soit 20 000 N.

L'énergie de déformation est, dans chaque cas, la surface sous la courbe déplacement-force.

La courbe C1 représente un comportement linéaire et théorique d'un l'absorbeur.

La courbe C2 correspond à un mode de réalisation de l'invention, et est commentée par la suite.

La courbe C3 représente un comportement non linéaire dont l'énergie de déformation, à déplacement égal, est inférieure à celle de l'absorbeur linéaire. Cet absorbeur utilise une déformation plus importante que l'absorbeur linéaire pour absorber l'énergie de référence. Elle correspond à un absorbeur selon la technique du document de brevet EP-1 805 063.

Le comportement de l'absorbeur, dans le cas de chocs qui vont au-delà de l'énergie de référence (correspondant à 10 km/h et 200 kg) est également important, car de tels chocs existent dans la réalité de l'exploitation des karts. L'importance de ce comportement est également illustrée par la figure 4.

L'absorbeur qui correspond à la courbe linéaire C1, est tel que, au-delà d'un certain enfoncement, il se comporte en point dur : la force augmente très fortement pour un faible déplacement. Ceci signifie que toute énergie additionnelle à absorber au-delà de l'énergie de référence se traduit par des forces élevées sur le châssis et sur le conducteur.

L'absorbeur de la courbe C3 a un comportement similaire.

Enfin, le coût de fabrication et le coût de maintenance du dispositif de protection doivent être aussi faibles que possible. Il s'agit donc de limiter le nombre d'éléments nécessaires et leur taille, et leur montage sur le véhicule doit être facile. De plus, il est souhaitable que ces éléments puissent être montés en des endroits dans lesquels ils ne gênent pas des organes du véhicule.

On connaît diverses techniques, dans le domaine des véhicules automobiles, et notamment une approche décrite par exemple dans les documents US- 5 570 918. US-4 200 38, ou DE 195 42 346, mettant en oeuvre un élément fixe par rapport au châssis du véhicule, portant et guidant un élément d'absorption de l'énergie. Cette approche ne peut pas s'adapter directement aux karts et ne serait pas efficace, en particulier en présence de chocs latéraux sur l'élément de protection avant.

### 3. Objectifs de l'invention

L'invention a notamment pour objectif de pallier au moins certains de ces inconvénients.

L'exposé ci-dessus montre qu'il se pose donc un problème de tolérance de chocs successifs, sans destruction de pièces et sans dégradation des caractéristiques de réaction du dispositif absorbeur. Par ailleurs, pour une même efficacité, il est souhaitable de limiter l'encombrement au repos du dispositif absorbeur, afin d'en limiter l'emprise sur le véhicule qui le porte.

Notamment, un objectif de l'invention est, selon au moins un mode de réalisation, de fournir un kart apte à tolérer un nombre élevé de chocs successifs, sans déformation plastique. Par exemple, dans au moins un mode de réalisation particulier, l'invention a pour objectif de répondre efficacement aux exigences de crash-tests successifs mentionnés ci-dessus.

Un autre objectif de l'invention est, selon au moins un mode de réalisation, de fournir un kart dont l'amortissement en cas de choc est efficace, sans que l'encombrement de la protection, et plus généralement de la partie avant, soit trop important, et/ou que la course des moyens d'amortissement soit trop importante.

En d'autres termes, selon au moins un mode de réalisation, un objectif de l'invention est de fournir un kart apte à absorber beaucoup d'énergie avec peu de course (réduire l'encombrement) et peu de contrainte, c'est-à-dire un faible nombre de G, soit donc une faible force.

Un autre objectif est d'optimiser la quantité d'énergie que l'on peut absorber dans l'espace disponible.

Encore un autre objectif de l'invention est, selon au moins un mode de réalisation, de fournir un tel kart, dont l'efficacité et les qualités dynamiques ne sont pas détériorées par les moyens d'amortissement.

L'invention a également pour objectif, selon au moins un mode de réalisation, de fournir un tel kart, dont la fabrication reste suffisamment simple, sans nécessité de pièces ou d'outillage complexes ou coûteux, et dont la maintenance soit aisée.

### 4. Résumé de l'invention

A cet effet, l'invention concerne tout d'abord un kart selon la revendication 1.

Ainsi, les moyens d'absorption intègrent, d'une part, le matériau élastique voulu, mais qui, seul, n'assurerait qu'imparfaitement sa fonction d'absorbeur, pour au moins deux raisons. La première est que la charge critique de compression correspondant au premier mode de flambement du matériau élastique serait trop basse, empêchant ainsi d'utiliser une partie importante de la course disponible pour absorber de l'énergie. La seconde est que le matériau élastique seul serait trop sensible à toute excentration de la force de compression, provocant ainsi un flambement prématuré et donc les mêmes inconvénients qu'un premier mode de flambement trop bas.

Les moyens d'absorption intègrent, d'autre part, au moins un élément de contrôle du flambage. Ce dernier permet ainsi d'empêcher ou de limiter le (ou les) premier(s) mode(s) de flambement du matériau élastique, et aussi de réduire la baisse de la charge critique due aux excentrations éventuelles des forces appliquées.

Le terme "flambage" concerne la déformation par instabilité de flambement de l'élément absorbant élastique, en particulier, ses modes de flambement de poutre. A titre d'exemple, si le matériau élastique est de forme cylindrique creuse, il peut s'agir d'éliminer les modes de flambement de poutre pour faire travailler les modes de flambement de paroi.

Le terme "contrôlé" signifie que certains modes de flambement sont éliminés ou limités.

Ainsi, l'élément de contrôle du flambage peut agir, selon un mode de réalisation privilégié, sur l'élément absorbant correspondant de façon à permettre successivement, lors d'un choc :
- une phase de compression dudit élément absorbant élastique ;
- une phase de compression en flambage contrôlé, dans laquelle l'élément de contrôle de flambage contraint l'élément absorbant élastique de façon à s'opposer à son flambage. Par exemple, l'élément élastique peut être contraint à travailler selon un ou des modes de flambement qui permettent d'obtenir une courbe force / déplacement souhaitée.

L'axe défini par l'élément de contrôle de flambage est mobile en pivotement, de façon à s'orienter et suivre le mouvement, et tendre à s'aligner parallèlement à l'axe l'impact d'un choc (ou à tout le moins à se rapprocher de celui-ci), lorsque celui-ci est oblique, c'est-à-dire appliqué latéralement sur l'élément de protection.

Ainsi, le dispositif de l'invention permet une absorption efficace du choc, que celui-ci soit frontal ou oblique.

Au moins un des éléments de contrôle de flambage est avantageusement muni d'un dispositif anti-déboîtement.

L'élément de contrôle de flambage peut être monté sur le châssis de façon à pouvoir pivoter dans une plage angulaire prédéterminée à l'encontre de la force de rappel angulaire de moyens élastiques, vers une orientation d'état de repos.

Selon un mode de réalisation particulier, au moins un élément de contrôle peut en outre être muni, à son extrémité, d'un élément de liaison élastique ou d'une rotule, afin de limiter les contraintes sur l'élément de contrôle, lors des chocs obliques.

On limite ainsi le risque d'arrachement à la liaison, et on assure l'orientation de l'élément de contrôle du flambage.

Avantageusement, l'élément absorbant élastique est creux et l'élément de contrôle de flambage s'étend à l'intérieur de l'élément absorbant élastique.

L'encombrement est ainsi réduit, et l'assemblage aisé.

En pareil cas, l'un au moins parmi l'élément absorbant élastique et l'élément de contrôle de flambage peut être cylindrique.

La composante des forces de résistance des secteurs de la section de l'élément absorbant élastique est ainsi centrée sur l'axe de cylindre, ce qui limite le risque de flambage, c'est-à-dire de cassure géométrique comme indiqué ci-dessus.

De préférence, les moyens d'absorption comprennent deux éléments absorbants élastiques s'étendant parallèlement à un axe longitudinal du châssis.

Dans une forme de réalisation intéressante, le châssis porte une première lame prévue pour coopérer avec une seconde lame associée à l'élément de protection, l'élément absorbant élastique étant monté entre les première et seconde lames.

L'une au moins des lames peut être élastique, pour ainsi contribuer à absorber l'énergie de déformation totale.

Les première et seconde lames peuvent comporter des tronçons d'extrémité mutuellement couplés par une liaison à encastrement ou une liaison à glissière.

L'invention concerne aussi un dispositif d'absorption d'énergie cinétique, selon la revendication 11.

On aura en effet compris que le dispositif absorbeur, ou moyens d'absorption, selon l'invention peut être disposé en tout endroit d'un véhicule, voire, de façon duale, en tout endroit d'un objet fixe susceptible d'être heurté.

Avantageusement, l'élément absorbant élastique est creux et l'élément de contrôle de flambage s'étend à l'intérieur de l'élément absorbant élastique.

L'invention concerne enfin une utilisation d'un dispositif d'absorption d'énergie selon l'invention, entre deux dites pièces constituées par respectivement un châssis et un élément de protection monté sur le châssis, pour absorber l'énergie induite par un contact sur l'élément de protection.

### 5. Liste des figures

L'invention sera mieux comprise à l'aide de la description suivante d'une forme de réalisation d'un châssis de kart équipé d'un dispositif d'absorption élastique d'énergie de choc selon l'invention, dont le fonctionnement et l'utilisation vont être expliqués, le tout en référence au dessin annexé, sur lequel :
- la figure 1 est un schéma, en vue de dessus, de la partie avant d'un châssis de kart équipé du dispositif ci-dessus, à l'état de repos,
- la figure 2 est homologue de la figure 1, mais pour un état de compression du dispositif d'absorption d'énergie, lors d'un choc,
- la figure 3 est une vue éclatée en perspective d'éléments absorbeurs, à propriétés élastiques, du dispositif d'absorption d'énergie, et
- la figure 4 illustre des courbes de réponse de force de résistance en fonction de la longueur d'enfoncement de divers types de dispositifs absorbeurs ;
- la figure 5 illustre des courbes de réponse de force de résistance en fonction de la longueur d'enfoncement du dispositif, pour une série de chocs successifs.

### 6. Description d'une forme de réalisation de l'invention et de variantes

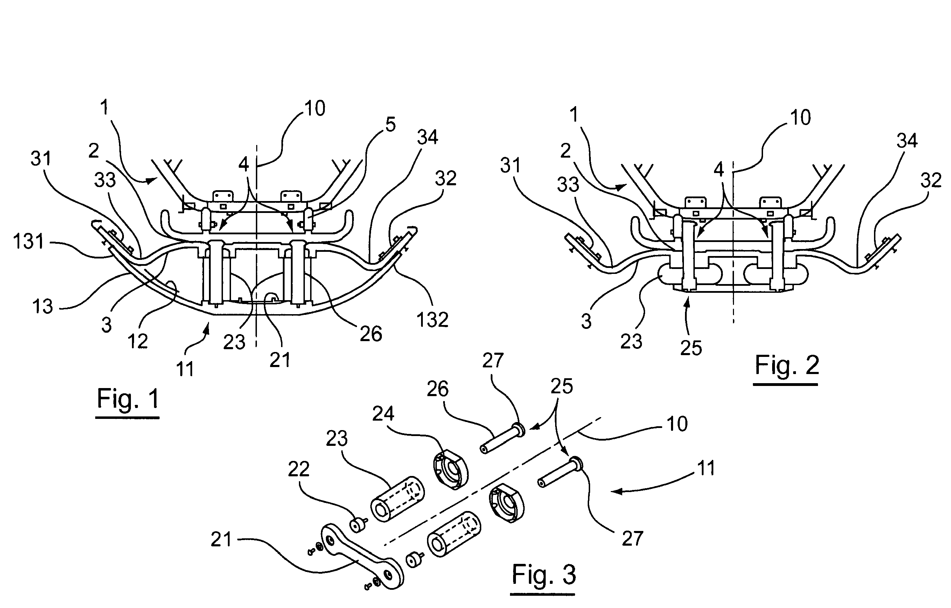

Les figures 1 et 2 sont des vues de dessus de l'avant d'un châssis 1 de kart équipé d'un dispositif 11 d'absorption d'énergie cinétique de choc (ou dispositif d'amortissement, ou dispositif absorbeur), dont la figure 3 est une vue éclatée en perspective des éléments constitutifs, selon un mode de réalisation particulier de l'invention.

Dans cet exemple de mise en oeuvre, le dispositif absorbeur 11 est donc situé en position frontale du châssis 1 pour coopérer avec une lame avant 13 de protection du kart subissant le choc d'une objet externe et donc reculant en direction du châssis 1, en direction verticale montante sur les figures 1 et 2, où la référence 10 désigne un axe médian longitudinal du châssis 1, ou sur l'un des côtés de cette lame (choc latéral, ou oblique).

L'invention est en effet adaptée à l'absorption de chocs frontaux ou obliques. Ceci est possible du fait que les éléments de contrôle du flambage, ou flambement, sont mobiles en rotation, ou en pivotement, sur une plage angulaire prédéterminée, de façon à tendre à s'aligner avec l'axe du choc.

Pour la facilité de l'exposé, le kart est supposé reposer sur un sol horizontal, c'est-à-dire que l'axe 10 est horizontal. La direction dite transversale est définie par rapport au châssis 1, sauf indication contraire, c'est-à-dire qu'il s'agit de la direction horizontale sur les figures 1 et 2.

Le châssis 1 comporte, en partie avant, une structure transversale porteuse 2 composée de deux tubulures dont l'une, inférieure, est fixée au reste du châssis 1 par deux courtes entretoises tubulaires longitudinales 5 mutuellement espacées latéralement et la deuxième, supérieure, est fixée directement sur le châssis 1 par deux "oreilles". La structure transversale porteuse 2 comporte, entre les tubulures inférieure et supérieure, un passage 4, longitudinal par rapport au châssis 1 et donc transversal par rapport à la structure transversale porteuse 2, permettant le passage de deux axes, ou corps longitudinaux, 26 de deux éléments de guidage 25 respectifs, exposés plus loin.

La face avant de la structure 2 porte une lame 3 en matériau élastique, ici du polyéthylène dont la tranche latérale, visible sur les figures 1 et 2, présente globalement un profil de forme arquée à concavité tournée vers l'avant, avec toutefois des premier et second tronçons d'extrémité 31, 32 s'étendant quelque peu vers l'arrière, après un coude respectif 33, 34 à concavité ouverte vers l'arrière. Le profil global de la lame 3 est ainsi en W, à courtes branches latérales.

Un élément de protection est monté à l'avant du kart. Il comprend notamment un spoiler, ou capot, 12 (non représenté intégralement) et une lame avant 13. Le capot 12 a une fonction de cache de la partie technique et/ou d'habillage et de décoration. Il peut être constitué d'une coque d'habillage en matériau plastique servant de protection, partiellement dessinée, intercalée entre une barrette transversale 21 et la lame avant 13. Celle-ci est réalisée en matériau élastique, ici du polyéthylène. Sa tranche latérale, visible sur les figures 1 et 2, présente globalement un profil de forme arquée à concavité tournée vers l'arrière.

La lame de protection avant du kart 13 et la lame 3 sont destinées à supporter les matériaux absorbeurs et, par leurs déformations, en permettre le travail, et partiellement contribuer à absorber l'énergie de déformation de l'ensemble.

Les lames 13 et 3 sont encastrées l'une par rapport à l'autre par les tronçons d'extrémité 31, 32 et 131, 132. Il est envisageable qu'elles coulissent l'une par rapport à l'autre, mais la solution ici proposée repose sur les déformations des lames.

Il est à noter que l'utilisation d'une coulisse telle que décrite dans le document EP-1805063 est envisageable. Il est également possible de cumuler les deux systèmes en intégrant une coulisse sur la solution d'absorption par flambage contrôlé comme sur la solution du document EP-1805063. Cela permettrait d'avoir des tours de roue rigides coulissant par rapport au châssis 1 cela permettrait de mieux protéger les roues et d'accroître la stabilité verticale du système.

Le volume délimité par les lames 3 et 13 contient le dispositif absorbeur 11, en double exemplaire dans cet exemple. Les deux dispositifs absorbeurs 11, disposés symétriquement par rapport à l'axe 10, sont destinés à absorber l'énergie de choc, par une déformation essentiellement, et de préférence purement, élastique, et non de type plastique, afin d'éviter un effet mémoire pour ainsi conserver, même après plusieurs chocs, les performances d'origine.

Pour ce faire, une face arrière de la lame avant 13 porte la barrette transversale 21, bien visible sur la figure 3, dont des faces arrière de deux tronçons d'extrémité portent deux extrémités avant de deux blocs respectifs de matériau amortisseur élastique en forme de colonnes 23 s'étendant longitudinalement et présentant une direction prévue de compression longitudinale, c'est-à-dire parallèlement à l'axe 10, qui représente ici la direction du choc.

Dans cet exemple, les colonnes 23 sont cylindriques et tubulaires, chacune comportant un passage axial logeant une tige axiale de guidage, constituée ici par un corps de guidage 26, appartenant à un élément de guidage 25. Un évasement d'extrémité 27 de chaque colonne assure une fonction anti-déboîtement du dispositif lors d'un choc latéral ou arrière.

Un bloc élastique 22, encore appelé silentbloc, ou en variante une rotule, un câble ou tout autre liaison permettant de limiter les contraintes de flexion sur cet élément, sert à désolidariser les corps de guidage 26 vis-à-vis de la barrette transversale 21, notamment pour en éviter l'arrachement en cas de choc oblique. Ainsi, les corps de guidage (qui sont, dans ce mode de réalisation, des tiges cylindriques) 26 tendent à s'aligner parallèlement à l'axe du choc (ou à tout le moins à se rapprocher de celui-ci), que celui-ci soit frontal ou oblique. Le bloc élastique 22 agit sur le corps de guidage 26 et l'aide à prendre cette direction.

Les corps de guidage peuvent notamment être réalisés en matière plastique.

Le bloc élastique 22 est fixé par vis sur la surface arrière considérée du tronçon d'extrémité de la barrette 21, pour recevoir un tronçon d'extrémité libre avant du corps de guidage 26, afin de lui offrir un certain degré de jeu, pour éviter tout risque d'arrachement. L'extrémité arrière de chaque colonne 23 est recouverte d'un capuchon cylindrique de protection 24, percé d'un trou axial de passage du corps de guidage 26.

Les colonnes 23 sont réalisées par exemple en polyuréthane, ou en tout autre matériau présentant les qualités d'élasticité et de compression requises.

La longueur du corps de guidage 26 restant libre correspond sensiblement à la longueur de colonne 23. Il peut toutefois être prévu un excédent (par exemple réglable par vissage), pour que les colonnes 23 soient initialement précontraintes sous une certaine force de compression axiale, afin de présenter une résistance initiale accrue contre les forces de compression en cas de choc.

La figure 2 montre que, après un choc frontal intense, les colonnes 23 sont fortement écrasées axialement, c'est-à-dire que la forme cylindrique de repos s'est déformée, idéalement dans cet exemple, en une forme annulaire globalement torique. Le matériau constitutif s'est en effet déformé radialement par effet de flambage. Les corps de guidage 26 ont coulissé longitudinalement dans le passage 4 ménagé entre les tubes de la structure transversale 2. Bien évidemment, la lame arrière 3 présente deux passages de recul des corps 26, ou bien elle est de forme adaptée pour contourner l'espace de passage des corps 26 des éléments de guidage 25, par une forme en dévoiement au-dessus ou au-dessous, en vue avant. En effet, d'une façon générale, tous les tronçons libres des lames 3 et 13, c'est-à-dire ceux qui ne servent qu'en tant qu'élément fléchissant, sans appui sur un autre élément, ne sont pas nécessairement dans une même tranche d'espace horizontale. De même, les tronçons d'extrémité 31, 131 et 32, 132 peuvent se trouver à un niveau autre que celui des colonnes 23.

La figure 2 montre que les éléments de guidage 25 ont préservé la symétrie axiale de chaque colonne 23, c'est-à-dire que son tronçon d'extrémité avant est resté longitudinalement "en regard" du tronçon d'extrémité arrière. Le tronçon d'extrémité avant s'est ainsi déplacé selon un trajet uniquement selon l'axe géométrique de la colonne 23, sans dévoiement latéral par rapport à cet axe local, hormis éventuellement un jeu radial initial existant autour du corps de guidage 26. On notera toutefois que le matériau de la colonne 23, comprimé axialement, tend à flamber radialement de façon externe mais aussi interne, c'est-à-dire qu'il tend à se rapprocher du corps de guidage 26 et donc à annuler tout jeu radial initial. Il y a ainsi un auto-centrage.

La figure 2 vise à illustrer uniquement le changement de forme des colonnes 23, c'est-à-dire que l'influence de la déformation de la lame avant 13 sur la lame arrière 3 n'a pas été représentée, la lame arrière 3 étant donc dessinée sous sa forme de repos.

En fait, les deux lames 3 et 13 étant maintenues mutuellement plaquées par les premiers et seconds tronçons d'extrémité 31, 131 et 32, 132, c'est-à-dire avec une même direction d'extension locale instantanée, sans possibilité de coulissement, la lame arrière 3, à profil en W, va se redresser, sous l'effet de deux types de contraintes.

D'une part, l'enfoncement de la partie centrale de la lame avant 13, au début du choc, provoque un pivotement des tronçons d'extrémité 131, 132 vers l'avant, c'est-à-dire vers une direction d'extension plus transversale. Les tronçons d'extrémité 31, 32 de la lame arrière 3 sont ainsi ramenés dans cette même direction transversale, à l'encontre de la force de résistance à la flexion du coude associé 33, 34, dont l'angle, ici à environ 100 degrés au repos, va s'ouvrir.

D'autre part, l'emprise transversale croissante de la lame avant 13 tend à écarteler la lame arrière 3. Cet écartèlement, en direction transversale, et la poussée de recul longitudinal de la lame avant 13, provoquent donc une déformation de la lame arrière 3, et précisément une diminution de sa courbure. Son emprise transversale peut ainsi suivre l'accroissement de l'emprise transversale de la lame avant 13.

On notera que les éléments de guidage, quelle que soit leur forme de réalisation (corps 26 ou autre), peuvent être fixés par leur extrémité avant (bloc 22 comme dessiné) ou arrière si la course d'écrasement de la lame avant 13 le permet. L'élément de guidage est donc alors fixe par rapport au châssis 1. Le passage 4 situé dans la lame arrière 3 et la structure 2 est utile dans le cas où l'élément de guidage 25 est fixé sur l'avant. Il n'y a pas de passage dans la lame avant 13, car cette lame sert de face de contact en cas de choc.

Il peut aussi être prévu que les éléments de guidage ne soient pas fixés, mais uniquement maintenus au niveau voulu. Par exemple, si leur coulissement est nécessaire, le passage 4 permet le recul de l'élément de guidage 25 dans un espace suffisant situé derrière la structure transversale 2.

En particulier, dans le mode de réalisation illustré, les deux éléments de guidage 25 définissent, en vue de dessus, deux côtés longitudinaux d'un parallélogramme dont les deux côtés transversaux sont constitués par, en avant, la barrette 21 et, en arrière, une ligne virtuelle reliant les deux passages 4, ou un équivalent, définissant la position arrière de passage en coulissement des corps de guidage 26. Ce parallélogramme, de forme rectangulaire lorsque l'ensemble est exempt de toute contrainte latérale, peut se déformer, en cas de choc latéral, du fait que chacun de ses quatre coins correspond à un assemblage autorisant un pivotement entre les deux côtés alors considérés.

En effet, les deux coins avant comportent les blocs élastiques respectifs 22, qui ont une fonction de rotule, leur élasticité assurant, au repos, le maintien à 90 degrés de chacun de ces deux coins avant. Comme le vissage des corps de guidage 26 met en légère compression axiale les colonnes 23 qu'ils traversent, l'extrémité arrière de celles-ci est en appui sur une surface avant purement transversale du châssis 1, précisément le capuchon 24, si bien que ce sont les colonnes 23 qui imposent élastiquement, aux corps de guidage 26 respectifs, une direction parfaitement longitudinale.

On notera donc que les blocs élastiques 22 des coins avant peuvent être remplacés par des rotules, ou équivalents, exempts d'élasticité de rappel angulaire, puisque, au repos, les colonnes 23 sont déjà maintenues en alignement purement longitudinal, par leur extrémité arrière. Ces rotules ou éléments équivalents peuvent se réduire à de simples éléments de couplage empêchant la dissociation des deux côtés considérés du rectangle, c'est-à-dire sans nécessairement assurer un guidage en rotation mutuelle de ceux-ci.

Les deux coins arrière sont définis par les passages 4, qui forment des sortes de colliers qui déterminent la position (longitudinale x, transversale y, et en hauteur z) de passage en recul par rapport au châssis 1, c'est-à-dire inhibent trois degrés de liberté en translation selon respectivement trois axes orthonormés X, Y, Z. Toutefois, les passages 4 ou équivalents autorisent au moins un degré de liberté en pivotement, ceci dans le plan horizontal défini par les axes X, Y, c'est-à-dire autour d'un axe vertical local.

Un choc latéral sur l'élément 11 ne va donc pas provoquer un désassemblage des éléments de guidage 25 mais, décentrant la barrette 21 par rapport à l'axe longitudinal 10, il ne fera que transformer le rectangle ci-dessus en un parallélogramme dont les deux côtés longitudinaux (c'est-à-dire les éléments de guidage 25) seront inclinés sur l'axe longitudinal 10. L'ensemble reste ainsi fonctionnel pour assurer l'amortissement voulu par recul des deux éléments de guidage 25. On conçoit qu'il peut être utile de prévoir aussi un second degré de liberté en pivotement dans un plan longitudinal vertical si le choc risque de présenter une composante verticale.

Pour autoriser le pivotement ci-dessus, chaque passage 4 présente une longueur axiale très limitée, associée à un gabarit de passage légèrement plus grand qu'un gabarit d'encombrement transversal du corps de guidage 26 qui le traverse. Précisément, le passage 4 présente, en coupe axiale horizontale, une forme rectangulaire (dont une première distance transversale, de passage, entre deux côtés longitudinaux opposés correspond au gabarit de passage) qui loge librement un rectangle, donc plus étroit, (dont une seconde distance transversale, d'encombrement, entre deux côtés longitudinaux opposés correspond au gabarit d'encombrement) représentant le tronçon considéré du corps de guidage 26. Le corps de guidage 26 peut ainsi pivoter autour de l'axe vertical local, dans une plage angulaire d'autant plus grande que a) la longueur axiale du passage 4 est réduite (absence de guidage longitudinal précis), et que b) les première et seconde distances transversales présentent une différence de valeurs élevée.

Il peut par exemple être prévu que les limites de la plage angulaire ci-dessus s'étendent chacune à 15, voire 30 degrés, respectivement de part et d'autre la direction de l'axe longitudinal 10. Dans une telle plage, le coulissement des corps de guidage 26 dans les passages respectifs 4 reste assuré puisque, bien que le choc soit quelque peu transversal, la force correspondante présente une composante axiale prépondérante et qu'il n'y a pas de grippage par frottement dur sur les parois des passages 4, les deux gabarits respectifs restant compatibles.

On conçoit que le principe de déformation du parallélogramme exposé ci-dessus est applicable quel que soit le nombre d'éléments de guidage 25, le parallélogramme se réduisant ainsi à un "I" s'il n'y a qu'un seul élément de guidage 25.

Le faisceau de courbes de la figure 4 représente une courbe C2 de réponse du dispositif absorbeur 11 selon un mode de réalisation de l'invention, par comparaison aux courbes C1 et C3 commentés en préambule, montrant la correspondance entre la force d'écrasement du choc et la course de recul, ou écrasement des colonnes 23, nécessaire pour engendrer des forces de réaction élastiques s'opposant à la force de l'impact.

On comprend que cette courbe C2 présente l'avantage d'avoir une grande capacité d'absorption, au-delà de l'énergie de référence : la force augmente, mais de façon progressive, avec un premier tronçon montant 41, un deuxième tronçon 42 en faux-plat légèrement descendant, et un troisième tronçon montant 43, de pente similaire à celle du premier tronçon. Les forces auxquelles sont soumis le conducteur et le cadre, pour des énergies au-delà de l'énergie de référence, sont sensiblement inférieures à celles des deux autres absorbeurs.

On peut noter, sur la courbe C2, les trois phases successives suivantes :
- une phase (41) de compression de l'élément absorbant élastique ;
- une phase (42) de compression en flambage contrôlé, dans laquelle l'élément de contrôle du flambage (26) contraint l'élément absorbant élastique (23) de façon à s'opposer à son flambage ;
- éventuellement, une nouvelle phase (43) de compression de l'élément absorbant élastique.

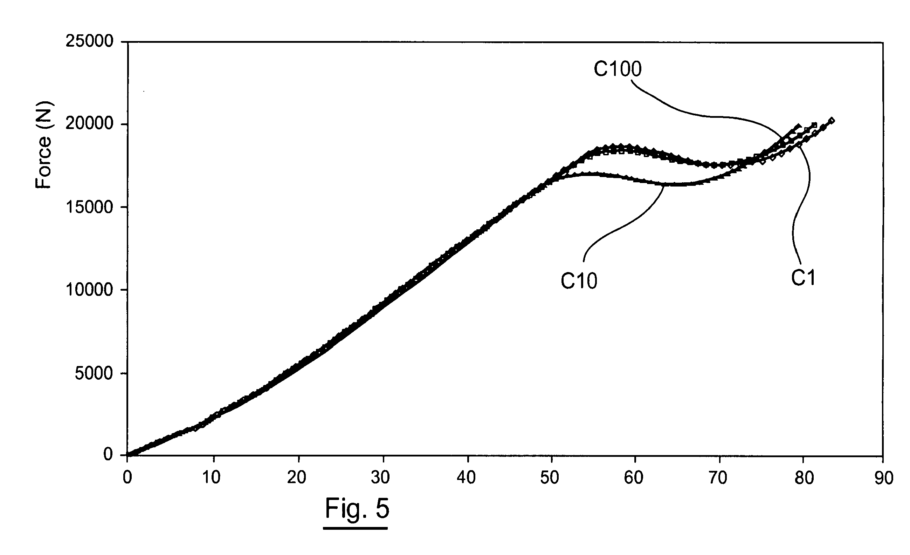

Les courbes de la figure 5 correspondent à des chocs successifs dans les conditions définies précédemment, en préambule, respectivement pour le premier choc (C₁), le dixième de 10 chocs consécutifs (C₁₀), ainsi que pour un centième choc (C₁₀₀). On constate que ces différentes courbes sont sensiblement superposées, ce qui confirme la bonne élasticité des moyens d'absorption de chocs, et l'absence de détérioration, même au bout de 100 chocs.

A titre de comparaison, pour un kart réalisé selon la technique illustrée dans le document de brevet EP 1 805 063, une force de 20 000 Newton entraîne un recul de l'ordre de 11 cm au premier choc, et de plus de 14 cm au centième choc, pour une énergie totale absorbée moindre.

-On notera aussi que l'élément de guidage, quelle que soit sa forme de réalisation, peut être disposé dans une position radialement décalée par rapport à l'axe de la colonne 23 associée. Par exemple, les éléments de guidage 25 peuvent rester disposés dans le plan horizontal du châssis 1 correspondant au plan des figures 1 et 2, mais en étant déportés latéralement, ou ils peuvent encore être disposés dans un plan inférieur ou supérieur. En de pareils cas, le corps 26 ainsi déporté radialement servira, au moyen de pattes latérales ou autres, de support distant pour un fourreau ou manchon entourant la colonne 23, les pattes assurant ainsi le déport inverse compensateur. On peut ainsi facilement s'affranchir de la nécessité du passage 4.

## Revendications

1. Kart comprenant un châssis (1, 2), un élément de protection (12, 13) monté sur l'avant du châssis (1, 2), et des moyens (11, 22, 23, 24, 25, 26) d'absorption de l'énergie cinétique induite par un choc sur l'élément de protection (12, 13), **caractérisé en ce que** les moyens d'absorption (11) comprennent :
- au moins un élément absorbant élastique (23), monté entre le châssis (1,2) et l'élément de protection (12, 13), pouvant passer d'un état de repos à un état compressé, et inversement ; et
- au moins un élément de contrôle de flambage (25) agencé pour s'opposer à des déformations de flambage de l'élément absorbant élastique (23), lorsque celui-ci est hors de l'état de repos, et monté mobile en pivotement par rapport au châssis (1, 2) sur une plage angulaire prédéterminée d'environ 15 degrés, voire de 30 degrés de part et d'autre de la direction de l'axe longitudinal (10) dudit kart.

2. Kart selon la revendication 1, **caractérisé en ce que** l'au moins un élément de contrôle de flambage (25) agit sur l'au moins un élément absorbant élastique (23) correspondant de façon à permettre successivement, lors d'un choc :
- une phase de compression dudit élément absorbant élastique (23) ;
- une phase de compression en flambage contrôlé, dans laquelle l'élément de contrôle de flambage (25) contraint l'élément absorbant élastique (23) de façon à s'opposer à son flambage.

3. Kart selon l'une quelconque des revendications 1 et 2, **caractérisé en ce que** l'au moins un élément de contrôle de flambage (25) est muni d'un dispositif anti-déboîtement (27).

4. Kart selon l'une quelconque des revendications 1 à 3, **caractérisé en ce que** l'au moins un élément de contrôle de flambage (25) est monté sur le châssis (1, 2) de façon à pouvoir pivoter dans une plage angulaire prédéterminée à l'encontre de la force de rappel angulaire de moyens élastiques (22, 23), vers une orientation d'état de repos.

5. Kart selon l'une quelconque des revendications 1 à 4, **caractérisé en ce que** l'au moins un élément de contrôle de flambage (25) coopère avec au moins une liaison élastique (22) et/ou une rotule.

6. Kart selon l'une quelconque des revendications 1 à 5, **caractérisé en ce que** l'au moins un élément absorbant élastique (23) est creux, et **en ce que** l'élément de contrôle de flambage (25) s'étend à l'intérieur dudit élément absorbant élastique (23).

7. Kart selon l'une quelconque des revendications 1 à 6, **caractérisé en ce que** l'au moins un élément absorbant élastique (23) et/ou l'au moins un élément de contrôle du flambage (25) est/sont cylindrique(s).

8. Kart selon l'une quelconque des revendications 1 à 7, **caractérisé en ce que** les moyens d'absorption (11, 22, 23, 24, 25, 26) comprennent au moins deux éléments absorbants élastiques (23), s'étendant parallèlement à un axe longitudinal (10) du châssis (1, 2).

9. Kart selon l'une quelconque des revendications 1 à 8, **caractérisé en ce que** le châssis (1, 2) porte une première lame (3), prévue pour coopérer avec une seconde lame (13) associée à l'élément de protection (12), l'au moins un élément absorbant élastique (23) étant monté entre les première et seconde lames (3, 13).

10. Kart selon la revendication 9, **caractérisé en ce que** les première et seconde lames (3, 13) comportent des tronçons d'extrémité (31, 32 ; 131, 132) mutuellement couplés par une liaison coulissante, une liaison à encastrement ou une liaison à glissière.

11. Dispositif (11) d'absorption d'énergie cinétique entre deux pièces d'un kart, **caractérisé en ce qu'**il comprend :
- au moins un élément absorbant élastique (23), prévu pour être monté entre un châssis (1, 2) et un élément (12, 13) de protection, pouvant passer d'un état de repos à un état compressé, et inversement ; et
- au moins un élément de contrôle de flambage (25) agencé pour s'opposer à des déformations de flambage de l'élément absorbant élastique (23), lorsque celui-ci est hors de l'état de repos, et monté mobile en pivotement par rapport au châssis (1, 2) dudit kart sur une plage angulaire prédéterminée d'environ 15 degrés, voire de 30 degrés, de part et d'autre de la direction de l'axe longitudinal (10) dudit kart.

12. Dispositif d'absorption d'énergie selon la revendication 11, **caractérisé en ce que** l'au moins un élément absorbant élastique (23) est creux et **en ce que** l'au moins un élément de contrôle de flambage (25) s'étend à l'intérieur du dit élément absorbant élastique (23).

## Patentansprüche

1. Go-kart, der ein Chassis (1, 2), ein Schutzelement (12, 13), das auf die Vorderseite des Chassis (1, 2) montiert ist, und Mittel (11, 22, 23, 24, 25, 26) zur Absorption der kinetischen Energie aufweist, die durch einen Aufprall auf das Schutzelement (12, 13) induziert wird, **dadurch gekennzeichnet, dass** die Absorptionsmittel (11) Folgendes aufweisend:
- mindestens ein elastisches Absorptionselement (23), das zwischen dem Chassis (1, 2) und dem Schutzelement (12, 13) montiert ist, das von einem Ruhezustand zu einem komprimierten Zustand und umgekehrt übergehen kann; und
- mindestens ein Knicksteuerelement (25), das eingerichtet ist, um sich Knickverformungen des elastischen Absorptionselements (23) zu widersetzen, wenn dieses außerhalb des Ruhezustands ist, und das schwenkend beweglich in Bezug zu dem Chassis (1, 2) auf einem vorbestimmten Winkelbereich von etwa 15 Grad, ja sogar 30 Grad, zu beiden Seiten der Richtung der Längsachse (10) des Go-karts montiert ist.

2. Go-kart nach Anspruch 1, **dadurch gekennzeichnet, dass** das mindestens eine Knicksteuerelement (25) auf das mindestens ein entsprechendes elastisches Absorptionselement (23) einwirkt, so dass nacheinander bei einem Aufprall Folgendes erlaubt wird:
- eine Kompressionsphase des elastischen Absorptionselements (23);
- eine Kompressionsphase mit gesteuertem Knicken, bei der das Knicksteuerelement (25) das elastische Absorptionselement (23) derart belastet, dass es sich seinem Knicken widersetzt.

3. Go-kart nach einem der Ansprüche 1 und 2, **dadurch gekennzeichnet, dass** das mindestens eine Knicksteuerelement (25) mit einer Ausrückschutzvorrichtung (27) versehen ist.

4. Go-kart nach einem der Ansprüche 1 bis 3, **dadurch gekennzeichnet, dass** das mindestens eine Knicksteuerelement (25) auf das Chassis (1, 2) derart montiert ist, dass es in einem vorbestimmten Winkelbereich gegen die Winkelrückholkraft elastischer Mittel (22, 23) zu einer Ruhezustandsausrichtung schwenken kann.

5. Go-kart nach einem der Ansprüche 1 bis 4, **dadurch gekennzeichnet, dass** das mindestens eine Knicksteuerelement (25) mit mindestens einer elastischen Verbindung (22) und/oder einem Gelenk zusammenwirkt.

6. Go-kart nach einem der Ansprüche 1 bis 5, **dadurch gekennzeichnet, dass** das mindestens eine elastische Absorptionselement (23) hohl ist, und dass sich das Knicksteuerelement (25) im Inneren des elastischen Absorptionselements (23) erstreckt.

7. Go-kart nach einem der Ansprüche 1 bis 6, **dadurch gekennzeichnet, dass** das mindestens eine elastische Absorptionselement (23) und/oder das mindestens eine Knicksteuerelement (25) zylindrisch ist/sind.

8. Go-kart nach einem der Ansprüche 1 bis 7, **dadurch gekennzeichnet, dass** die Absorptionsmittel (11, 22, 23, 24, 25, 26) mindestens zwei elastische Absorptionselemente (23) aufweisen, die sich parallel zu einer Längsachse (10) des Chassis (1, 2) erstrecken.

9. Go-kart nach einem der Ansprüche 1 bis 8, **dadurch gekennzeichnet, dass** das Chassis (1, 2) eine erste Klinge (3) aufweist, die vorgesehen ist, um mit einer zweiten Klinge (13), die zu dem Schutzelement (12) gehört, zusammenzuwirken, wobei das mindestens eine elastische Absorptionselement (23) zwischen der ersten und der zweiten Klinge (3, 13) montiert ist.

10. Go-kart nach Anspruch 9, **dadurch gekennzeichnet, dass** die erste und die zweite Klinge (3, 13) Endabschnitte (31, 32; 131, 132) aufweisen, die gegenseitig durch eine Schiebeverbindung, eine Verbindung mit Verschachteln oder eine Gleitverbindung gekuppelt sind.

11. Vorrichtung (11) zur Absorption kinetischer Energie zwischen zwei Teilen eines Go-karts, **dadurch gekennzeichnet, dass** sie Folgendes aufweist:
- mindestens ein elastisches Absorptionselement (23), das vorgesehen ist, um zwischen ein Chassis (1, 2) und ein Schutzelement (12, 13) montiert zu werden, das von einem Ruhezustand zu einem komprimierten Zustand übergehen kann und umgekehrt; und
- mindestens ein Knicksteuerelement (25), das eingerichtet ist, um sich Knickverformungen des elastischen Absorptionselements (23) zu widersetzen, wenn dieses außerhalb des Ruhezustands ist, und das schwenkend beweglich in Bezug zu dem Chassis (1, 2) des Go-karts auf einem vorbestimmten Winkelbereich von etwa 15 Grad, ja sogar 30 Grad, zu beiden Seiten der Richtung der Längsachse (10) des Go-karts montiert ist.

12. Energieabsorptionsvorrichtung nach Anspruch 11, **dadurch gekennzeichnet, dass** das mindestens eine elastische Absorptionselement (23) hohl ist, und dass sich das mindestens eine Knicksteuerelement (25) im Inneren des elastischen Absorptionselements (23) erstreckt.

## Claims

1. Go-kart comprising a chassis (1, 2), a protection element (12, 13) which is fitted on the front of the chassis (1, 2) and means (11, 22, 23, 24, 25, 26)for absorption of the kinetic energy induced by an impact on the protection element (12, 13), **characterised in that** the absorption means (11) comprise:
- at least one resilient absorbing element (23) which is fitted between the chassis (1, 2) and the protection element (12, 13), and can go from a state of rest to a compressed state, and conversely; and
- at least one buckling control element (25) which is designed to oppose buckling deformations of the resilient absorbing element (23) when the latter is not in the state of rest, and is fitted such as to be mobile in pivoting relative to the chassis (1, 2) around a predetermined angular range of approximately 15 degrees or even 30 degrees on both sides of the direction of the longitudinal axis (10) of the said go-kart.

2. Go-kart according to claim 1, **characterised in that** the at least one buckling control element (25) acts on the at least one corresponding resilient absorbing element (23), such as to permit in succession, during an impact:
- a phase of compression of the said resilient absorbing element (23);
- a phase of compression with controlled buckling, wherein the buckling control element (25) restrains the resilient absorbing element (23) such as to oppose its buckling.

3. Go-kart according to either of claims 1 and 2, **characterised in that** the at least one buckling control element (25) is provided with an anti-dislocation device (27).

4. Go-kart according to any one of claims 1 to 3, **characterised in that** the at least one buckling control element (25) is fitted on the chassis (1, 2) such as to be able to pivot in a predetermined angular range against the angular return force of resilient means (22, 23), towards an orientation of state of rest.

5. Go-kart according to any one of claims 1 to 4, **characterised in that** the at least one buckling control element (25) co-operates with at least one resilient connection (22) and/or a ball joint.

6. Go-kart according to any one of claims 1 to 5, **characterised in that** the at least one resilient absorbing element (23) is hollow, and **in that** the buckling control element (25) extends in the interior of the said resilient absorbing element (23).

7. Go-kart according to any one of claims 1 to 6, **characterised in that** the at least one resilient absorbing element (23) and/or at least one buckling control element (25) is/are cylindrical.

8. Go-kart according to any one of claims 1 to 7, **characterised in that** the absorption means (11, 22, 23, 24, 25, 26) comprise at least two resilient absorbing elements (23) which extend parallel to a longitudinal axis (10) of the chassis (1, 2).

9. Go-kart according to any one of claims 1 to 8, **characterised in that** the chassis (1, 2) bears a first plate (3) which is designed to co-operate with a second plate (13) associated with the protection element (12), the at least one resilient absorbing element (23) being fitted between the first and second plates (3, 13).

10. Go-kart according to claim 9, **characterised in that** the first and second plates (3, 13) comprise end sections (31, 32; 131, 132) which are coupled to one another by a sliding connection, an embedded connection or a guided connection.

11. Device (11) for absorption of kinetic energy between two parts of a go-kart, **characterised in that** it comprises:
- at least one resilient absorbing element (23) which is designed to be fitted between a chassis (1, 2) and a protection element (12, 13), and can go from a state of rest to a compressed state, and conversely; and
- at least one buckling control element (25) which is designed to oppose buckling deformations of the resilient absorbing element (23) when the latter is not in the state of rest, and is fitted such as to be mobile in pivoting relative to the chassis (1, 2) of the said go-kart around a predetermined angular range of approximately 15 degrees or even 30 degrees on both sides of the direction of the longitudinal axis (10) of the said go-kart.

12. Energy absorption device according to claim 11, **characterised in that** the at least one resilient absorbing element (23) is hollow, and **in that** the at least one buckling control element (25) extends in the interior of the said resilient absorbing element (23).
